# EUROPEAN PATENT APPLICATION

(11) **EP 3 674 162 A1**
(43) Date of publication of application: **01.07.2020**
(21) Application number: 19218364.8
(22) Date of filing: 19.12.2019
(51) Int. Cl.: B60W 50/12, B60W 60/00, B60K 28/02, B60W 30/14, B60R 25/00

(54) **CONTROLLING VEHICLE OPERATIONS BASED ON DRIVER INFORMATION**

(30) Priority: 27.12.2018 US 201816233259
(71) Applicant: BlackBerry Limited, Waterloo, Ontario N2K 0A7 (CA)
(72) Inventor: Boulton, Adam John, Waterloo, Ontario N2K 0A7 (CA)
(74) Representative: Hanna Moore + Curley

(57) **Abstract**

A method, comprising the steps of:
transmitting (202), from a vehicle (120), a driving information request, wherein the driving information request comprises an identification (ID) of a driver;
receiving (204), at the vehicle, a driving information response, wherein the driving information response comprises driving information that is associated with the driver; and
controlling (206), by at least one hardware processor (106) on the vehicle, an operation of the vehicle based on the driving information.

## Description

### TECHNICAL FIELD

The present disclosure relates to controlling vehicle operations based on driver information.

### BACKGROUND

In some cases, a vehicle can include one or more sensors. The one or more sensors can generate inputs, e.g., video or audio inputs, that reflect the surroundings of the vehicle. Examples of the sensors can include cameras, microphones, laser, radar, ultrasonic, light detection and ranging (LIDAR) or any other sensors.

The vehicle may also include an autopilot processing platform that generates autopilot commands. The autopilot processing platform can receive inputs from one or more sensors installed on the vehicle. The autopilot processing platform may include one or more autopilot processors that generate autopilot commands based on these inputs. These autopilot commands are directed to components of the vehicle to control the movements of the vehicle. Examples of the components include without limitation steering wheel, brakes, accelerator, lights, and the like. Examples of the autopilot commands include without limitation accelerate, decelerate, turn left or right, signal, and the like. A vehicle equipped with the autopilot processing platform can be referred to as a self-driving vehicle, a driver-less vehicle, an autonomous or semi-autonomous vehicle, or an autopilot vehicle.

### SUMMARY

Accordingly there is provided a method, a vehicle and a computer program as detailed in the claims that follow.

### DESCRIPTION OF DRAWINGS

FIG. 1 is a schematic diagram showing an example communication system that controls vehicle operations based on driver information, according to an implementation.
FIG. 2 is a flow diagram showing an example method that controls vehicle operations based on driver information, according to an implementation.
FIG. 3 is a high-level architecture block diagram of a computing system, according to an implementation.

Like reference numbers and designations in the various drawings indicate like elements.

### DETAILED DESCRIPTION

In some cases, a vehicle can be operated by a human driver. While the human driver may have access to the vehicle, e.g., having a key, the human driver may not be qualified to operate the vehicle. The human driver may have a license that is expired or a license that is suspended due to a recent driving violation. The human driver may also have a license that authorizes the human driver to operate a certain class of vehicles that are different from the current vehicle. Additionally, the human driver may have committed driving violations indicating that the human driver has unsafe driving habits.

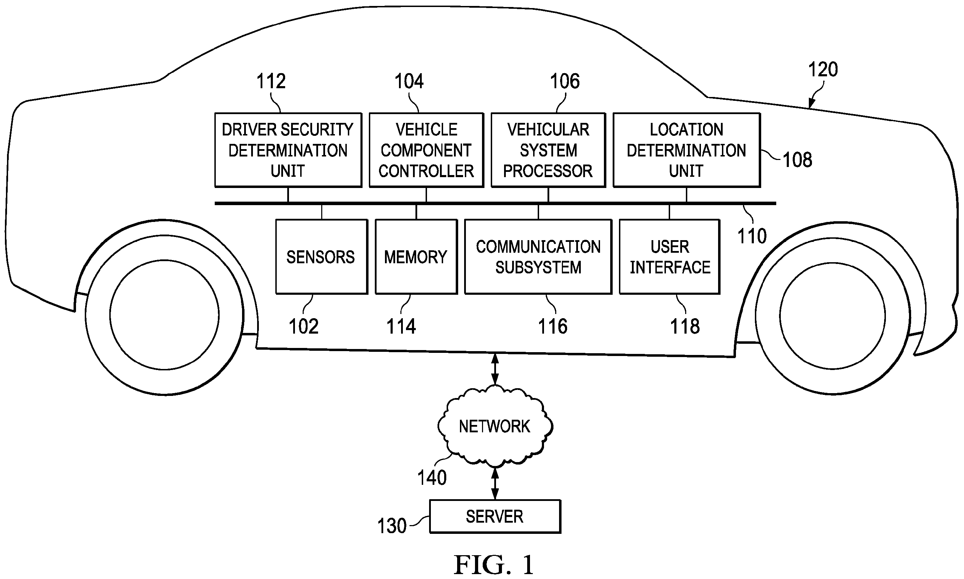

In some implementations, driving safety can be improved by controlling vehicle operation based on the driving information of the human driver. The vehicle can prevent the human driver from starting the engine, shifting the gear (e.g., from park or neutral to forward or reverse drive), or otherwise moving the vehicle, based on the up-to-date driving information of the driver. Additionally or alternatively, the vehicle can include an autopilot processing platform that can drive the vehicle without the human driver or issue autopilot commands that affect the driving operations (e.g., speed) of the vehicle while the human driver is driving the operation. In one example implementation, the vehicle can identify the human driver, and send a driving information request to receive the up-to-date driving information of the driver. The driving information can include driver's license information, driving record information, or other information of the driver that indicates whether the driver is authorized to operate the vehicle and whether the driving operation should be limited. The vehicle can control the operation of the vehicle, including preventing or limiting the driving opreation by the human driver, based on the driving information. FIGS. 1-3 and associated descriptions provide additional details to these implementations. This approach improves the driving safety of the vehicle. This approach also enables an enterprise, e.g., a commerical fleet operator, to flexbily control the operations of its vehicles based on up-to-date driving records of its drivers.

FIG. 1 is a schematic diagram showing an example communication system 100 that controls vehicle operations based on driver information, according to an implementation. At a high level, the example communication system 100 includes a vehicle 120 and a server 130 that are communicatively coupled over a network 140.

The vehicle 120 can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. In the illustrated example, the vehicle 120 includes one or more sensors 102, a vehicle component controller 104, a vehicular system processor 106, a communication subsystem 116, a user interface 118, memory 114, a driver security determination unit 112, and a location determination unit 108 that are connected to a bus 110.

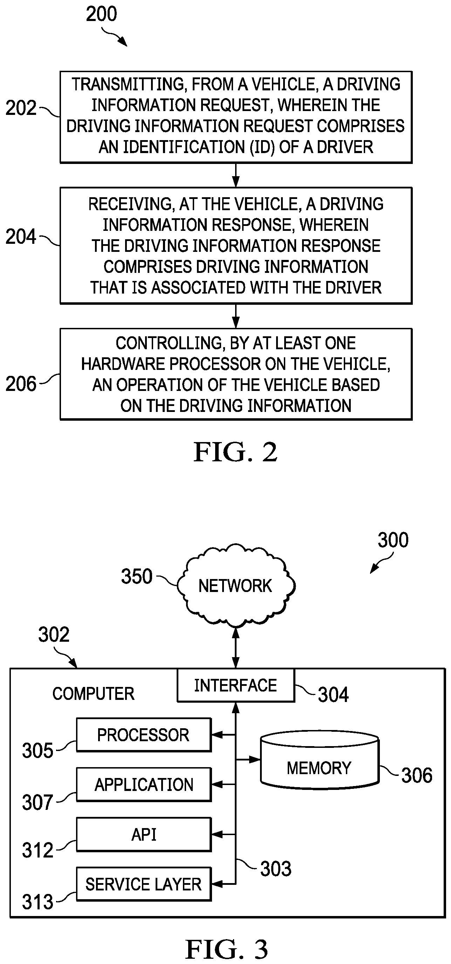

The vehicle 120 includes one or more sensors 102 that detect or measure information for the vehicle 120. Examples of the sensors 102 can include devices that capture environmental information that is external to the vehicle 120, such as cameras, microphones, radars, laser transmitters and receivers, and the like. These sensors can provide environmental inputs for an autopilot processing platform operating on the vehicle 120 to make autopilot decisions. Examples of the sensors 102 can also include devices that capture information that is internal to the vehicle 120, such as monitors for components such as engine, battery, fuel, electronic system, cooling systems, and the like. These sensors can provide operation status and warnings to the autopilot processing platform operating on the vehicle 120. Examples of the sensors 102 can also include devices that can receive or detect biometric input from a driver. The biometric input can be used by the vehicle 120 to authenticate the driver. FIG. 2 and associated descriptions provide additional details of these implementations.

The vehicle 120 includes a location determination unit 108. The location determination unit 108 represents an application, a set of applications, software, software modules, hardware, or any combination thereof that can be configured to determine a current location of the vehicle 120. In one example, the location determination unit 108 can include a Global Positioning System (GPS) receiver. In some cases, the location determination unit 108 can determine the current location of the vehicle 120 and report to the driver security determination unit 112, the vehicular system processor 106, or other components of the vehicle 120. FIG. 2 and associated descriptions provide additional details of these implementations.

The vehicle 120 includes a vehicle component controller 104. Although illustrated as a vehicle component controller 104 in FIG. 1, the vehicle 120 can include two or more vehicle component controllers 104. The vehicle component controller 104 represents a controller that controls the operation of a component on the vehicle 120. Examples of the components can include engine, accelerator, brake, radiator, battery, steering wheel, transmission system, cooling system, electrical system, and any other components of the vehicle 120. The vehicle component controller 104 can operate a respective component automatically, according to input from the vehicular system processor 106, or a combination thereof. In some implementations, the vehicle component controller 104 can include a data processing apparatus.

The vehicular system processor 106 can include one or more processing components (alternatively referred to as "processors" or "central processing units" (CPUs)) configured to execute instructions related to one or more of the processes, steps, or actions for the autopilot processing platform operating on the vehicle 120. Generally, the vehicular system processor 106 executes instructions and manipulates data to perform the operations of the driving processing platform. The vehicular system processor 106 can receive inputs from the sensors 102 and generate commands to the vehicle component controller 104. In some cases, the vehicular system processor 106 can perform autopilot operations. In some cases, the vehicular system processor 106 can include a data processing apparatus.

The communication subsystem 116 can be configured to provide wireless or wireline communication for data or control information of the vehicle 120. For example, the communication subsystem 116 can support transmissions over wireless local area network (WLAN or WiFi), near field communication (NFC), infrared (IR), Radio-frequency identification (RFID), Bluetooth (BT), Universal Serial Bus (USB), or any other short-range communication protocols. The communication subsystem 116 can also support Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, 5G, or any other radio access technologies. The communication subsystem 116 can include, for example, one or more antennas, a receiver, a transmitter, a local oscillator, a mixer, and a digital signal processing (DSP) unit. In some implementations, the communication subsystem 116 can support multiple input multiple output (MIMO) transmissions. In some implementations, the receivers in the communication subsystem 116 can be an advanced receiver or a baseline receiver.

The user interface 118 can include, for example, any of the following: one or more of a display or touch screen display (for example, a liquid crystal display (LCD), a light emitting diode (LED), an organic light emitting diode (OLED), or a micro-electromechanical system (MEMS) display), a keyboard or keypad, a trackball, a speaker, or a microphone. The user interface 118 can also include I/O interface, for example, a universal serial bus (USB) interface.

The memory 114 can be a computer-readable storage medium. Examples of the memory 114 include volatile and non-volatile memory, magnetic media, optical media, random access memory (RAM), read-only memory (ROM), removable media, and others. The memory 114 can store an operating system (OS) of the vehicle 120 and various other computer-executable software programs for performing one or more of the processes, steps, or actions described above.

The driver security determination unit 112 represents an application, a set of applications, software, software modules, hardware, or any combination thereof that can be configured to generate vehicle operation control commands based on driving information of a driver. In some cases, the driver security determination unit 112 can generate a driving information request, send the driving information request to the communication subsystem 116 to transmit the driving information request to the server 130. The communication subsystem 116 can receive a driving information response from the server 130 and forward it to the driver security determination unit 112. The driver security determination unit 112 can generate vehicle operation control commands that prevent or limit the driver from operating the vehicle 120 according to the driving information of the driver included in the driving information response. The driver security determination unit 112 can direct the vehicle operation control commands to the vehicle component controller 104, the vehicular system processor 106, or a combination thereof to control the vehicle operation of the vehicle 120. FIG. 2 and associated descriptions provide additional details of these implementations. In some implementation, the driver security determination unit 112 can be implemented as a separate software program or part of a software program that is executed by the vehicular system processor 106.

As illustrated, the bus 110 provides a communication interface for components of the autopilot processing platform operating on the vehicle 120. In some cases, the bus 110 can be implemented using a Controller Area Network (CAN) bus.

Some of the components of the vehicle 120 can be implemented on a device that is associated with the vehicle 120. For example, the driver security determination unit 112 can be implemented on a portable electronic device that is connected with the vehicle 120 over NFC, BT, USB, or any other wireless or wireline communication technologies. The portable electronic device may include, without limitation, any of the following: endpoint, computing device, mobile device, mobile electronic device, user device, mobile station, subscriber station, portable electronic device, mobile communications device, wireless modem, wireless terminal, or other electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, or other mobile communications devices having components for communicating voice or data via a wireless communication network.

The server 130 represents an application, a set of applications, software, software modules, hardware, or any combination thereof that can be configured to receive the driving information request and send the driving information response. The server 130 can be a server operated or controlled by a government or entity that stores or has access to driving information of drivers. The server 130 can also be an intermediary server operated by an enterprise that further sends queries to other servers that store or have access to driving information of drivers. The server 130 can also be an enterprise server that stores service subscription information of drivers. Though illustrated as one server, the server 130 can include multiple servers, servers operated in a distributing computing platform, servers operated in a cloud computing platform, or any combinations thereof.

The example communication system 100 includes the network 140. The network 140 represents an application, set of applications, software, software modules, hardware, or combination thereof, that can be configured to transmit data between the server 130 and the vehicle 120 in the system 100. The network 140 includes a wireless network, a wireline network, or a combination thereof. For example, the network 140 can include one or a plurality of radio access networks (RANs), core networks (CNs), and external networks. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, 5G, or any other radio access technologies. In some instances, the core networks may be evolved packet cores (EPCs).

A RAN is part of a wireless telecommunication system which implements a radio access technology, such as UMTS, CDMA2000, 3GPP LTE, 3GPP LTE-A, and 5G. In many applications, a RAN includes at least one base station. A base station may be a radio base station that may control all or at least some radio-related functions in a fixed part of the system. The base station may provide radio interface within their coverage area or a cell for a mobile device to communicate. The base station may be distributed throughout the cellular network to provide a wide area of coverage. The base station directly communicates to one or a plurality of mobile devices, other base stations, and one or more core network nodes.

While elements of FIG. 1 are shown as including various component parts, portions, or modules that implement the various features and functionality, nevertheless, these elements may, instead, include a number of sub-modules, third-party services, components, libraries, and such, as appropriate. Furthermore, the features and functionality of various components can be combined into fewer components, as appropriate.

FIG. 2 is a flow diagram showing an example method 200 that controls vehicle operations based on driver information, according to an implementation. The method 200 can be implemented by the entities shown in FIG. 1, including, for example, the vehicle 120. The method 200 shown in FIG. 2 can also be implemented using additional, fewer, or different entities. Furthermore, the method 200 shown in FIG. 2 can be implemented using additional, fewer, or different operations, which can be performed in the order shown or in a different order. In some instances, an operation or a group of operations can be iterated or repeated, for example, for a specified number of iterations or until a terminating condition is reached.

At 202, the vehicle transmits a driving information request. In some cases, the driving information request can be transmitted to a server. The server can be operated by a local, federal/national, or international government entity/organization that stores driving information of a driver. The server can receive an inquiry of driving information of a driver and release the driving information to the public. In these or other cases, the driving information request can be formatted according to the communication protocol used by the entity or organization for query. For example, a government entity can use a web server to respond to the query of driving information of a driver. The driving information request can thus be a Hypertext Transfer Protocol (HTTP) message or a Hypertext Transfer Protocol Secure (HTTPS) message.

In some cases, the server can be operated by an enterprise entity. The enterprise server can operate as an intermediary and further query other servers, e.g., servers operated by government entities, for driving information of a driver. This approach may reduce the complexity of generating the driving information request and simplify the implementation of the vehicle. For example, different government entities (e.g., state or country) can have different mechanisms and use different communication protocols for the querying and releasing of driving information of a driver. The enterprise server can receive the driving information request, identify the specific government server that can be accessed to query the driving information, and generate a specific query according to the communication protocol used by the specific government server. The enterprise server can receive the driving information of the driver from the government server and generate a response that encapsulates the driving information. Alternatively or additionally, the vehicle can select the server of a particular government entity (e.g., a particular state or country) based on the identification information of the driver discussed below, and send the driving information request to the selected server according to the communication protocol used by the selected server.

The driving information request is generated by the vehicle. In some cases, the generation and transmission of the driving information request can be triggered by a user interaction of the vehicle. The user interaction can be an operation that transitions the vehicle to a state of driving or soon-to-be driving. Examples of the user interaction can include: unlocking a door of the vehicle, opening a door of the vehicle, turning on the vehicle, starting the engine of the vehicle, shifting the gear of the vehicle from parking to drive. Alternatively or additionally, the user interaction can also be a user input that initiates the driving information request through a user interface of the vehicle, e.g., a tap on a touchscreen in the vehicle or a voice command. In some cases, the vehicle can perform an authentication procedure after receiving the user interaction. The authentication can be performed based on a biometric input from the user. Examples of the biometric input can include fingerprint, palmprint, hand geometry, facial image, retina scan, iris scan, voice, signature, gait, or other inputs of biometric data input. The authentication can also be based on password or other security credentials. In some cases, the vehicle can generate and transmit the driving information request after the vehicle authenticates that the user interaction is issued by an authorized driver of the vehicle.

The vehicle includes an identification (ID) of the driver in the driving information request. The ID can be the driver's license number, passport number of the driver, the name of the driver, the social security number of the driver or any other information that can identify the driver. In some cases, the vehicle can store the IDs of a list of drivers that are authorized to operate the vehicle, and associate these IDs with biometric data or driver-specific credential (e.g., driver-specific password or driver-specific key) of each driver on the list. During the authentication process discussed previously, the vehicle can identify the particular driver that initiates the user interaction that triggers the driving information request, e.g., by matching the received biometric input or security credential with one of the stored biometric data or security credentials. The vehicle can thus retrieve the ID of the particular driver and include it in the driving information request. Alternatively or in combination, the vehicle can provide a user interface for the driver to enter the ID or other information associated with the driver.

In some cases, the driving information request can include supplemental driver information of the driver. The supplemental driver information can include information of driving insurance of the driver or the vehicle (e.g., information of insurer, insurance account, expiration date), birthdate or other information of the driver, or information of the government entity that issued the driver's license/passport or other ID of the driver. In some cases, the ID, the supplemental driver information, or a combination thereof can be used by the enterprise server discussed previously to determine the particular government server to be further queried for driving information. In some cases, the driving information request can also include current location information of the vehicle. The current location information can also be used by the enterprise server to determine the particular government server to be further queried for driving information.

At 204, the vehicle receives a driving information response. The driving information response includes driving information of the driver. As discussed previously, the driving information response can be sent by a server operated by a government/organization that stores the driving information of the driver, or by an intermediary server that further distributes the request to a selected server.

The driving information of the driver can include information of the driver's license of the driver. For example, the driving information can indicate whether the driver's license has expired or suspended. In some cases, the driving information can include an expiration date of the driver's license. The vehicle can thus determine whether the driver's license has expired based on the expiration date of the driver's license and the current date. The driving information can also indicate the category or class of the vehicle that the driver is authorized to operate. In some cases, the class or the category of vehicles are defined by a government agency or other regulatory bodies. For example, in the United States, a class C vehicle is a single vehicle weighing 26,001 or more pounds and the unit being towed is less than 10,000 pounds, while a class A vehicle is a combination of vehicles with a Gross Vehicle Weight Rating (GVWR) of 26,001 lbs. or more, provided the GVWR of the vehicle or vehicles being towed is in excess of 10,000 lbs. In the United Kingdom, motor vehicles of categories C1, C, D1, D, C1E, CE, DIE or DE are defined (see e.g., https://www.gov.uk/guidance/changes-to-the-driving-licence-and-categories) Thus one example, the driving information can indicate that the driver is authorized to operate a vehicle of one or more classes or categories.

The driving information of the driver can include also include driving record information of the driver. The driving record information can indicate the safety level of the driving habits of the driver. The driving record information can include information of driving violation of the driver. The information can include the type, the date, the penalty level of one or more driving violations committed by the driver. In some cases, the driving record information can also include the current point of the driver. In some regions, a driver's license would be suspended if the current point is below a threshold. Additionally or alternatively, in some regions, a driver's license would be suspended if the current accumulated penalty exceeds a threshold.

Following is an example of the driving information of the driver that can be included in the driving information response:

```
 {
 "name": "Mr JOE BLOGGS",
 "dob": "11 Feb 1991",
 "gender": "Male",
 "address": "1 Bloggs Road Bloggs BB42 5BB",
 "validFrom": "22 Sep 2015",
 "validTo": "4 Jun 2020",
 "licenceNumber": "BLOGG902111JB9TR",
 "issueNumber": "08",
 "penaltyPoints": 0,
 "vehicleCategories": [
  {
   "category": "AM",
   "startDate": "2 Feb 2013",
   "endDate": "10 Feb 2061 "
  },
  {
   "category": "A",
   "startDate": "19 Jan 2013",
   "endDate": "10 Feb 2061 "
  },
  {
   "category": "B1",
   "startDate": "11 Dec 2008",
   "endDate": "10 Feb 2061 "
  },
  {
   "category": "B",
   "startDate": "11 Dec 2008",
   "endDate": "10 Feb 2061 "
  },
  {
   "category": "C1",
   "startDate": "1 May 2015",
   "endDate": "10 Feb 2036 "
  },
  {
   "category": "C",
   "startDate": "1 May 2015",
   "endDate": "10 Feb 2036 "
  },
  {
   "category": "F",
   "startDate": "11 Dec 2008",
   "endDate": "10 Feb 2061 "
  },
  {
   "category": "K",
   "startDate": "11 Dec 2008",
   "endDate": "10 Feb 2061 "
  },
  {
   "category": "P",
   "startDate": "11 Dec 2008",
   "endDate": "10 Feb 2061 "
  },
  {
   "category": "Q",
   "startDate": "2 Feb 2013",
   "endDate": "10 Feb 2061 "
  },
  {
   "category": "A",
   "startDate": "11 Feb 2008",
   "endDate": "10 Feb 2061"
  },
  {
   "category": "BE",
   "startDate": "18 Dec 2008",
   "endDate": "10 Feb 2061"
  },
  {
   "category": "C1E",
   "startDate": "5 Jun 2015",
   "endDate": "10 Feb 2036"
  },
  {
   "category": "CE",
   "startDate": "5 Jun 2015",
   "endDate": "10 Feb 2036"
  },
  {
   "category": "D1",
   "startDate": "13 Mar 2015",
   "endDate": "10 Feb 2036"
  },
  {
   "category": "D",
   "startDate": "13 Mar 2015",
   "endDate": "10 Feb 2036"
  },
  {
   "category": "G",
   "startDate": "18 Dec 2008",
   "endDate": "10 Feb 2061"
  },
  {
   "category": "H",
   "startDate": "18 Dec 2008",
   "endDate": "10 Feb 2061"
  }
 ],
 "penalties": [
  {
   "penaltyPoint": 3,
   "offenceDate": "30 Jul 2014",
   "expiryDate": "30 Jul 2017",
   "removalDate": "30 Jul 2018",
   "category": "D",
   "fine": 0.0,
   "state": "Expired"
  }
 ],
 "disqualifications": [
  {
   "startDate": "2 May 2012",
   "endDate": "1 Feb 2013",
   "convictionDate": "2 May 2012",
   "removalDate": "2 May 2023",
   "category": "D",
   "fine": 110.0,
   "period": "9 months"
  }
 ],
 "digitalTachograph": {
  "currentCardStatus": "Valid",
  "validFrom": "4 Jun 2015",
  "validTo": "3 Jun 2020",
  "cardNumber": "DB15154162091400"
 }
 }
```

At 206, the vehicle controls the operation of the vehicle based on the driving information of the driver received in the driving information response. In one example, the vehicle can prevent the driver from operating the vehicle, e.g., driving the vehicle, if the driving information response indicate that the driver's license of the driver is not found, expired, or suspended. In another example, the vehicle can prevent the driver from operating the vehicle if the current point of the driver is below a configured threshold or the current accumulated penalty of the driver exceeds a configured threshold, even though the driver is still allowed to drive under the law of local government. This approach can enable the administrator of the vehicle, e.g., a corporation of a commercial fleet, set a safety requirement for its driver that is more stringent than the government requirement. In some cases, if the driver is prevented from operate the vehicle, the driver may authorize the vehicle to travel to a destination under the control of the autopilot processing platform of the vehicle.

In yet another example, the vehicle can allow the driver to operate the vehicle on a limited basis based on the driving information of the driver. For example, more than one safety thresholds can be configured by the manufacturer, the owner, or an administrator of the vehicle. If the safety record of the driver, e.g., based on the current point or penalty, is below a first threshold, the driver is prevented from operating the vehicle. If the safety record the driver is above the first threshold but below a second threshold, the driver is allowed to operate the vehicle with a limitation. The limitation can be a maximum speed, acceleration, or turn operation that can be performed by the driver. The maximum speed, acceleration, or turn operation can be preconfigured or determined based on the current location and road condition. For example, if the vehicle detects that the vehicle has reached the configured maximum speed for such a driver, the vehicle can refrain from continuing acceleration even though the driver continues to give accelerating command, e.g., by tapping the gas pedal.

Alternatively or in combination, the vehicle can limit the driving operation of the driver based on the types of violations in the driving information. For example, if the driving information indicates that the driver has committed one or more speeding violations, the vehicle can limit the maximum speed of the vehicle accordingly. If the driving information indicates that the driver has committed one or more driving under influence violations, the vehicle can instruct the driver to perform one or more tests to confirm that the driver is sober. The number and type of violations triggering a limitation of the driving operation can be configured by the manufacturer, the owner, or an administrator of the vehicle. In another example, the driving information can include information of a date of the last medical examination underwent by the driver. In some regions, local government may require drivers older than certain age threshold to complete periodic medical examinations that verify that they are physically fit to drive. In these cases, if the vehicle determines the driver does not meet the medical examination requirement based on the information of the date of the last medical examination the vehicle can prevent the driver from starting the vehicle.

In some cases, a vehicle may provide one or more subscription services. Examples of the subscription services can include navigation service, entertainment services such as satellite radio or TV services, communication services such as cellular network (e.g., 3G, 4G, or 5G) services or WLAN services, or other services that require a subscription or registration. The subscription or registration can be user-specific. Thus, while multiple drivers can operate a vehicle, each of them can receive different services based on their subscription. In some implementations, vehicle subscription information can also be queried and received using similar mechanisms discussed previously. For example, the vehicle can send a vehicle subscription information request to a server. The vehicle subscription information request can be the same message as the driving information request, or a different message. The vehicle subscription information request can also include the ID of the driver discussed previously. The vehicle subscription information request can be sent to an enterprise server that stores or has access to vehicle subscription information. The enterprise server can be the intermediary server discussed previously or a different server. The enterprise server can retrieve the vehicle subscription information of the driver, and send the vehicle subscription information to the vehicle. The vehicle subscription information can be sent in the same message as the driving information response discussed previously, or in a different message. The vehicle can determine the types of services that the driver is subscribed to, based on the vehicle subscription information. The vehicle can provide the types of services that are currently subscribed to the driver.

FIG. 3 is a high-level architecture block diagram showing a computer 302 coupled with a network 350, according to an implementation. The described illustration is only one possible implementation of the described subject matter and is not intended to limit the disclosure to the single described implementation. Those of ordinary skill in the art will appreciate the fact that the described components can be connected, combined, or used in alternative ways, consistent with this disclosure.

The network 350 facilitates communications between the computer 302 and other devices. In some cases, a user, e.g., an administrator, can access the computer 302 from a remote network. In these or other cases, the network 350 can be a wireless or a wireline network. In some cases, a user can access the computer 302 locally. In these or other cases, the network 350 can also be a memory pipe, a hardware connection, or any internal or external communication paths between the components.

The computer 302 includes a computing system configured to perform the algorithm described in this disclosure. For example, the computer 302 can be used to implement the server 130 shown in FIG. 1. In some cases, the algorithm can be implemented in an executable computing code, e.g., C/C++ executable code. Alternatively, or in combination, the algorithm can be implemented in an application program, e.g., EXCEL. In some cases, the computer 302 can include a standalone LINUX system that runs batch applications. In some cases, the computer 302 can include mobile or personal computers that run the application program.

The computer 302 may include an input device, such as a keypad, keyboard, touch screen, microphone, speech recognition device, or another device that can accept user information, and/or an output device that conveys information associated with the operation of the computer 302, including digital data, visual and/or audio information, or a GUI.

The computer 302 can serve as a client, network component, a server, a database or other persistency, or the like. In some implementations, one or more components of the computer 302 may be configured to operate within a cloud-computing-based environment.

At a high level, the computer 302 is an electronic computing device operable to receive, transmit, process, store, or manage data and information. According to some implementations, the computer 302 may also include or be communicably coupled with an application server, e-mail server, web server, caching server, streaming data server, business intelligence (BI) server, and/or other server.

The computer 302 can receive requests over network 350 from a client application (e.g., executing on a user device) and respond to the received requests by processing said requests in an appropriate software application. In addition, requests may also be sent to the computer 302 from internal users (e.g., from a command console or by another appropriate access method), external or third parties, other automated applications, as well as any other appropriate entities, individuals, systems, or computers.

Each of the components of the computer 302 can communicate using a system bus 303. In some implementations, any and/or all the components of the computer 302, both hardware and/or software, may interface with each other and/or the interface 304 over the system bus 303, using an application programming interface (API) 312 and/or a service layer 313. The API 312 may include specifications for routines, data structures, and object classes. The API 312 may be either computer language-independent or -dependent and refer to a complete interface, a single function, or even a set of APIs. The service layer 313 provides software services to the computer 302. The functionality of the computer 302 may be accessible for all service consumers using this service layer. Software services, such as those provided by the service layer 313, provide reusable, defined business functionalities through a defined interface. For example, the interface may be software written in JAVA, C++, or other suitable language providing data in Extensible Markup Language (XML) format or other suitable format. While illustrated as an integrated component of the computer 302, alternative implementations may illustrate the API 312 and/or the service layer 313 as standalone components in relation to other components of the computer 302. Moreover, any or all parts of the API 312 and/or the service layer 313 may be implemented as child or sub-modules of another software module or hardware module, without departing from the scope of this disclosure.

The computer 302 includes an interface 304. Although illustrated as a single interface 304 in FIG. 3, two or more interfaces 304 may be used according to particular needs, configurations, or particular implementations of the computer 302. The interface 304 is used by the computer 302 for communicating with other systems in a distributed environment connected to the network 350 - (whether illustrated or not). Generally, the interface 304 comprises logic encoded in software and/or hardware in a suitable combination and operable to communicate with the network 350. More specifically, the interface 304 may comprise software supporting one or more communication protocols associated with communications such that the network 350 or interface's hardware are operable to communicate physical signals.

The computer 302 includes a processor 305. Although illustrated as a single processor 305 in FIG. 3, two or more processors may be used according to particular needs, configurations, or particular implementations of the computer 302. Generally, the processor 305 executes instructions and manipulates data to perform the operations of the computer 302. In some cases, the processor 305 can include a data processing apparatus.

The computer 302 also includes a memory 306 that holds data for the computer 302. Although illustrated as a single memory 306 in FIG. 3, two or more memories may be used according to particular needs, configurations, or particular implementations of the computer 302. While memory 306 is illustrated as an integral component of the computer 302, in alternative implementations, memory 306 can be external to the computer 302.

The application 307 comprises an algorithmic software engine providing functionality according to particular needs, configurations, or particular implementations of the computer 302. Although illustrated as a single application 307, the application 307 may be implemented as multiple applications 307 on the computer 302. In addition, although illustrated as integral to the computer 302, in alternative implementations, the application 307 can be external to the computer 302.

There may be any number of computers 302 associated with, or external to, the system 300 and communicating over network 350. Further, the terms "client," "user," and other appropriate terminology may be used interchangeably, as appropriate, without departing from the scope of this disclosure. Moreover, this disclosure contemplates that many users may use one computer 302, or that one user may use multiple computers 302.

Some of the subject matter and operations described in this disclosure can be implemented in digital electronic circuitry, or in computer software, firmware, or hardware, including the structures described in this disclosure and their structural equivalents, or in combinations of one or more of them. Some of the subject matter described in this disclosure can be implemented as one or more computer programs, i.e., one or more modules of computer program instructions, encoded on a computer storage medium for execution by, or to control the operation of, data-processing apparatus. Alternatively, or in addition, the program instructions can be encoded on an artificially generated propagated signal, for example, a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or any combinations of computer-storage mediums.

The terms "data-processing apparatus," "computer," or "electronic computer device" encompass all kinds of apparatus, devices, and machines for processing data, including, by way of example, a programmable processor, a computer, a system on a chip, or multiple ones, or combinations of the foregoing. The apparatus can include special purpose logic circuitry, e.g., an FPGA (field programmable gate array) or an ASIC (application specific integrated circuit). In some implementations, the data processing apparatus or special purpose logic circuitry (or a combination of the data processing apparatus or special purpose logic circuitry) may be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, IOS, or any other suitable, conventional operating system.

A computer program, which may also be referred to, or described, as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site, or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

Some of the processes and logic flows described in this disclosure can be performed by one or more programmable processors, executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read-only memory or a random-access memory, or both. A processor can include by way of example a programmable processor, a computer, a system on a chip, or multiple ones, or combinations of the foregoing. A processor can include special purpose logic circuitry, e.g., an FPGA (field programmable gate array) or an ASIC (application specific integrated circuit).

Computers suitable for the execution of a computer program can be based on general or special purpose microprocessors, both, or any other kind of CPU. Generally, a CPU will receive instructions and data from a read-only memory (ROM) or a random-access memory (RAM), or both. The essential elements of a computer are a CPU, for performing or executing instructions, and one or more memory devices, for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable storage device, for example, a universal serial bus (USB) flash drive, to name just a few.

Computer-readable media (transitory or non-transitory, as appropriate) suitable for storing computer program instructions and data include all forms of non-volatile memory, media and memory devices, including, by way of example, semiconductor memory devices, for example, erasable programmable read-only memory (EPROM), electrically erasable programmable read-only memory (EEPROM), and flash memory devices; magnetic disks, for example, internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry. In some cases, the computer storage medium can be transitory, non-transitory, or a combination thereof.

To provide for interaction with a user, implementations of the subject matter described in this disclosure can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to, and receiving documents from a device that is used by the user, for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this disclosure can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this disclosure, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.11x and 802.20 or other protocols consistent with this disclosure), all or a portion of the Internet, or any other communication system, or systems at one or more locations (or a combination of communication networks). The network may communicate with, for example, Internet Protocol (IP) packets, Frame Relay frames, Asynchronous Transfer Mode (ATM) cells, voice, video, data, or other suitable information (or a combination of communication types) between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, either hardware or software (or a combination of hardware and software), may interface with each other, or the interface using an application programming interface (API), or a service layer (or a combination of API and service layer). The API may include specifications for routines, data structures, and object classes. The API may be either computer language, independent or dependent, and refer to a complete interface, a single function, or even a set of APIs. The service layer provides software services to the computing system. The functionality of the various components of the computing system may be accessible for all service consumers using this service layer. Software services provide reusable, defined business functionalities through a defined interface. For example, the interface may be software written in JAVA, C++, or other suitable language providing data in extensible markup language (XML) format or other suitable format. The API or service layer (or a combination of the API and the service layer) may be an integral or a stand-alone component in relation to other components of the computing system. Moreover, any or all parts of the service layer may be implemented as child or sub-modules of another software module, or hardware module without departing from the scope of this disclosure.

While this disclosure contains many specific implementation details, these should not be construed as limitations on the scope of any invention or on the scope of what may be claimed, but rather as descriptions of features that may be specific to particular implementations of particular inventions. Certain features that are described in this disclosure in the context of separate implementations can also be implemented, in combination, in a single implementation. Conversely, various features that are described in the context of a single implementation can also be implemented in multiple implementations, separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the implementations described above should not be understood as requiring such separation or integration in all implementations, and it should be understood that the described program components and systems can, generally, be integrated together in a single software product or packaged into multiple software products.

Accordingly, the above description of example implementations does not define or constrain this disclosure. Other changes, substitutions, and alterations are also possible without departing from the spirit and scope of this disclosure.

Furthermore, any claimed implementation below is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the computer-readable medium.

## Claims

1. A method, comprising:
transmitting, from a vehicle, a driving information request, wherein the driving information request comprises an identification (ID) of a driver;
receiving, at the vehicle, a driving information response, wherein the driving information response comprises driving information that is associated with the driver; and
controlling, by at least one hardware processor on the vehicle, an operation of the vehicle based on the driving information.

2. The method of claim 1, wherein the driving information request is transmitted in response to a successful authentication of the driver by the vehicle.

3. The method of claim 2, further comprising: retrieving the ID of the driver in response to the successful authentication of the driver by the vehicle.

4. The method of any preceding claim, further comprising: receiving the ID of the driver through a user interface of the vehicle.

5. The method of any preceding claim, wherein the driving information comprises driver's license information of the driver, and the controlling the operation of the vehicle comprises:
determining, by the at least one hardware processor on the vehicle, whether the driver has an expired driver's license based on the driver's license information; and
determining, by the at least one hardware processor on the vehicle, whether to enable the driver to operate the vehicle based on the determining whether the driver has the expired driver's license.

6. The method of any preceding claim, wherein the driving information comprises driving record information of the driver, and the controlling the operation of the vehicle comprises:
controlling a speed of the vehicle based on the driving record information of the driver.

7. The method of any preceding claim, further comprising receiving, at the vehicle, vehicle subscription information associated with the driver, wherein the vehicle subscription information indicates a vehicle service subscribed by the driver.

8. A vehicle, comprising:
at least one hardware processor; and
a computer-readable storage medium coupled to the at least one hardware processor and storing programming instructions for execution by the at least one hardware processor, wherein the programming instructions, when executed, cause the at least one hardware processor to perform operations comprising:
transmitting, from the vehicle, a driving information request, wherein the driving information request comprises an identification (ID) of a driver;
receiving, at the vehicle, a driving information response, wherein the driving information response comprises driving information that is associated with the driver; and
controlling, by at least one hardware processor on the vehicle, an operation of the vehicle based on the driving information.

9. The vehicle of claim 8, wherein the driving information request is transmitted in response to a successful authentication of the driver by the vehicle.

10. The vehicle of claim 9, the operations further comprising: retrieving the ID of the driver in response to the successful authentication of the driver by the vehicle.

11. The vehicle of any one of claims 8 to 10, the operations further comprising: receiving the ID of the driver through a user interface of the vehicle.

12. The vehicle of any one of claims 8 to 11, wherein the driving information comprises driver's license information of the driver, and the controlling the operation of the vehicle comprises:
determining, by the at least one hardware processor on the vehicle, whether the driver has an expired driver's license based on the driver's license information; and
determining, by the at least one hardware processor on the vehicle, whether to enable the driver to operate the vehicle based on the determining whether the driver has the expired driver's license.

13. The vehicle of any one of claims 8 to 12, wherein the driving information comprises driving record information of the driver, and the controlling the operation of the vehicle comprises:
controlling a speed of the vehicle based on the driving record information of the driver.

14. The vehicle of any one of claims 8 to 13, the operations further comprising receiving, at the vehicle, vehicle subscription information associated with the driver, wherein the vehicle subscription information indicates a vehicle service subscribed by the driver.

15. A computer-program which, when executed, causes a computing device to perform the method of any one of claims 1 to 7.
